(19) **Europäisches Patentamt / European Patent Office / Office européen des brevets**

(11) **EP 3 279 707 A1**

(12) **EUROPEAN PATENT APPLICATION**
published in accordance with Art. 153(4) EPC

(43) Date of publication:
**07.02.2018 Bulletin 2018/06**

(21) Application number: **16772926.8**

(22) Date of filing: **30.03.2016**

(51) Int Cl.:
**G02B 5/00** (2006.01)  **B29C 59/02** (2006.01)

(86) International application number:
**PCT/JP2016/060306**

(87) International publication number:
**WO 2016/159045 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2015 JP 2015069349**
**19.08.2015 JP 2015161883**

(71) Applicant: **Scivax Corporation**
**Kawasaki-shi, Kanagawa 212-0032 (JP)**

(72) Inventors:
 • **NAWATA Akifumi**
  **Kawasaki-shi**
  **Kanagawa 212-0032 (JP)**
 • **KITAHARA Toshiyuki**
  **Kawasaki-shi**
  **Kanagawa 212-0032 (JP)**
 • **TANAKA Satoru**
  **Kawasaki-shi**
  **Kanagawa 212-0032 (JP)**

(74) Representative: **Gille Hrabal**
**Brucknerstrasse 20**
**40593 Düsseldorf (DE)**

(54) **ANTI-REFLECTIVE STRUCTURE**

(57) Provided is an antireflection structure capable of sufficiently suppressing reflection of light. An antireflection structure 1 includes a concavo-convex structure 3 for antireflection formed on a surface of a base material 2 formed of a material that absorbs light. The concavo-convex structure 3 satisfies $P > \lambda$, preferably, $P \geq 6\lambda$, where $\lambda$ is a wavelength of light and P is an average pitch of the concavo-convex structure 3. In addition, it is preferable that the concavo-convex structure should satisfy $H/P \geq 1$ where H is an average depth of the concavo-convex structure.

FIG. 1

EP 3 279 707 A1

**Description**

TECHNICAL FIELD

The present disclosure relates to an antireflection structure that suppresses the reflection of light from surface.

BACKGROUND ART

In optical elements, such as a camera and a liquid crystal display, a surface light reflection may become a problem. For example, although a fixed diaphragm that has a role of narrowing light beam to a constant amount of light and transmitting the light to an imaging sensor is provided in the lens unit of a camera, when a light reflection occurs on the surface of the diaphragm, the light becomes stray light, deteriorating a clear image, and thus a low reflectivity is necessary for the surface of the diaphragm. In addition, since the inner circumference end face, etc., of the fixed diaphragm is located on the optical path, when unnecessary light in the lens unit is reflected by the inner circumference end face, the reflected light enters the imaging sensor, causing improper image-pickup, such as a flare and a ghost. In order to prevent such improper image-pickup, a fixed diaphragm, etc., having the inner circumference end face subjected to an antireflection processing is desired.

Conventionally, a black covering film is known which has a titanium oxide film including a concavo-convex structure formed of microscopic columnar crystals, and formed on the surface of a resin-made substrate (see, for example, Patent Document 1).

CITATION LIST

PATENT LITERATURES

Patent Document 1: WO 2010/026853 A

SUMMARY OF INVENTION

TECHNICAL PROBLEM

However, the concavo-convex structure is not a controlled structure, and is still insufficient in view of antireflection angle. In addition, a prevention of diffracted light by the concavo-convex structure is not taken into consideration.

Hence, an objective of the present disclosure is to provide an antireflection structure that is capable of further suppressing reflection of light.

SOLUTION TO PROBLEM

In order to achieve the above objective, an antireflection structure according to the present disclosure includes a concavo-convex structure for antireflection formed on a surface of a base material formed of a material that absorbs light, in which the concavo-convex structure satisfies $P > \lambda$, where $\lambda$ is a wavelength of light and $P$ is an average pitch of the concavo-convex structure.

In this case, it is preferable that the material should contain a light absorbing component that absorbs the light, and an average particle diameter of the light absorbing component should be equal to or smaller than 1/2 of the wavelength of the light. In addition, it is preferable that the concavo-convex structure should satisfy $P \geq 6\lambda$. Still further, it is preferable that the concavo-convex structure should satisfy $H/P \geq 1$ where $H$ is an average depth of the concavo-convex structure. Yet still further, it is preferable that $L \geq \lambda$ should be satisfied where $L$ is a thickness of the base material. Moreover, the average pitch $P$ of the concavo-convex structure should be equal to or smaller than 10 $\mu$m.

It is preferable that the concavo-convex structure should be in a form that does not cause diffraction light. For example, element structures of the concavo-convex structure may be disposed at random. In this case, it is preferable that either one of or both of a size and shape of the element structure should be adjusted in such a way that the number of plane parts is small in comparison with a case in which the size and shape of the element structure are constant.

The element structure of the concavo-convex structure may be in a bombshell shape with a rotated parabola or may be in a line-and-space shape. A cross-sectional shape of a convexity of the line-and-space shape may be a triangle.

In addition, the material of the base material should be a resin for imprinting.

ADVANTAGEOUS EFFECTS OF INVENTION

The antireflection structure of the present disclosure can sufficiently suppress reflection of light by the controlled concavo-convex structure.

BRIEF DESCRIPTION OF DRAWINGS

FIG. 1 is a perspective view illustrating an antireflection structure according to the present disclosure;
FIG. 2 is a graph illustrating the reflectivity of the antireflection structure according to the present disclosure;
FIG. 3 is a plan view illustrating the antireflection structure according to the present disclosure;
FIG. 4 is an explanatory diagram illustrating the shape of a concavo-convex structure as viewd from a direction of a line I-I in FIG. 3;
FIG. 5 is a perspective view illustrating another antireflection structure according to the present disclosure;
FIGS. 6(a) and 6(b) are each a graph illustrating the reflectivity of another antireflection structure according to the present disclosure;
FIGS. 7(a) and 7(b) are each an explanatory diagram illustrating the shape of a cross-section of a concavo-convex structure; and
FIGS. 8(a) and 8(b) are each a graph illustrating the reflectivity of another antireflection structure.

DESCRIPTION OF EMBODIMENTS

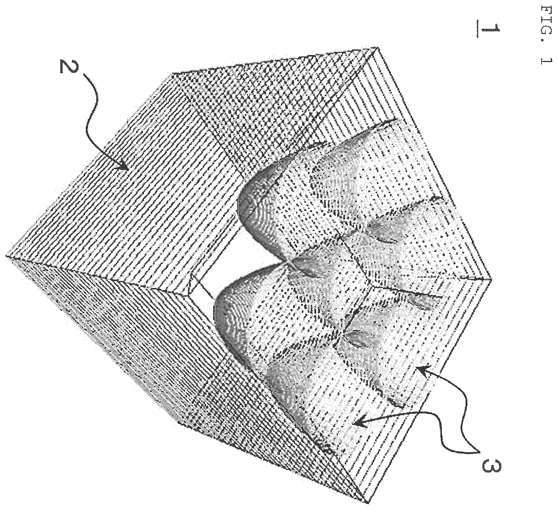

An antireflection structure 1 according to the present disclosure is, as illustrated in FIG. 1, a structure having a concavo-convex structure 3 for antireflection which is formed on a surface of a base material 2 that is formed of a light absorbing material, and which satisfies $P > \lambda$ where the wavelength of light is $\lambda$ and the average pitch of the concavo-convex structure 3 is P.

The light in this case means light (electromagnetic wave) with a predetermined wavelength for which antireflection is desired. Hence, when the light contains several electromagnetic waves with different wavelengths, it is necessary to form the concavo-convex structure 3 that satisfies $P > \lambda$ for all wavelengths of light for which antireflection is desired. That is, what the maximum wavelength of the electromagnetic wave contained in the light is $\lambda_{max}$, it is appropriate if the concavo-convex structure 3 is formed so as to satisfy $P > \lambda_{max}$. When, for example, as for visible light with the wavelength within the range of 380 nm to 780 nm, antireflection for all electromagnetic waves is desired, it is appropriate if the concavo-convex structure 3 is formed so as to satisfy $P > 780$ nm.

The base material 2 can be in any shape in accordance with the application and the purpose, but for example, a sheet shape and a substrate shape are applicable. In addition, the base material 2 is formed of a material capable of absorbing light. The material capable of absorbing light indicates a material that has a higher ratio of absorbing light than the ratio of reflecting the light, and an extinction coefficient k is preferably equal to or smaller than 0.4, more preferably, equal to or smaller than 0.2, and further preferably, equal to or smaller than 0.1. Such a material may contain light absorbing components which are likely to absorb light. Example light absorbing components are black colorants, such as carbon black, aniline black, titanium black, and acetylene black. In addition, it is preferable that the particle diameter of the light absorbing component should be sufficiently small relative to the wavelength of the light to be absorbed so as not to cause scattering and reflection. More specifically, it is appropriate if the average particle diameter of the particle contained in the material is equal to or smaller than 1/2 of the wavelength of light to be absorbed, more preferably, equal to or smaller than 1/4. Note that the average particle diameter of the light absorbing component can be measured using a particle size distribution measuring device. As for a measurement principle of the particle size distribution measuring device, measurement can be made through, for example, an imaging scheme of directly obtaining the image of particles by electron microscope like transmission electron microscope (TEM), and converting the image into the size of the particle, a laser diffraction and scattering scheme of emitting laser light to the particle group, and obtaining the particle size distribution by calculation based on the intensity distribution pattern of the diffraction and scattering light emitted from the particle group, etc.

In addition, it is preferable that the material of the base should be a material suitable for processes capable of controlling the form of the concavo-convex structure 3, such as imprinting, embossing, and an injection molding. Example materials suitable for imprinting are thermoplastic resin, thermosetting resin, etc., and those resin that contain light absorbing components are applicable. When a thickness L of the base material 2 becomes too small in comparison with the wavelength $\lambda$ of light, the light to be concerned is likely to pass the base material 2, and the light absorbing effect of the antireflection structure 1 decreases. Therefore, it is preferable that the thickness of the base material 2 should satisfy $L \geq \lambda$.

The concavo-convex structure 3 includes multiple element structures capable of suppressing light reflection, and is formed on the surface of the base material 2. Example forms of the concavo-convex structure capable of suppressing light reflection are the shape of the element structure of the concavo-convex structure 3, the pitch of the adjoining element structures, the depth of the element structure, the aspect ratio that is the ratio between the pitch and the depth, etc. When those are controlled as appropriate, light reflection can be suppressed.

Still further, it is preferable that the concavo-convex structure 3 should be in the form that does not cause diffraction light. For example, the average pitch P of the concavo-convex structure 3 is formed so as to be larger than the wavelength $\lambda$ of light. This is because diffraction light is caused by the concavo-convex structure 3 when the average pitch P of the concavo-convex structure 3 is smaller than the wavelength $\lambda$ of light. In order to surely suppress the occurrence of diffraction light, a large setting, such as $P \geq 2\lambda$, $P \geq 3\lambda$, $P \geq 4\lambda$, $P \geq 5\lambda$, $P \geq 6\lambda$, $P > 7\lambda$, $P \geq 8\lambda$, $P \geq 9\lambda$, and $P \geq 10\lambda$. When, however, the average pitch P is too large, it becomes possible for a human eye to recognize the concavo-convex structure, the vertex and bottom of the concavo-convex structure become a size approximated as a plane relative to the wavelength of light and the reflection suppressing effect decreases. Hence, it is preferable that the average pitch P should be equal to or smaller than 10 $\mu$m.

In addition, another scheme of preventing occurrence of diffraction light is a scheme of disposing the element structures of the concavo-convex structure 3 at random. However, when the element structures of the concavo-convex structure 3 with the same size and shape are disposed at random, a gap is formed between the element structures, and there is a part that becomes a plane. Such a plane is likely to reflect light. Hence, it is preferable that there is no part that becomes a plane between the element structures. In order to do so, it is appropriate if either one of or both of the size and shape of the element structure are adjusted so as to reduce the number of plane parts in comparison with a case in which the element structures of the concavo-convex structure 3 have the same size and shape.

Although the concavo-convex structure 3 can be manufactured by sandblasting, etc. but under such processing, the form (disposition, size and shape of element structure) of the concavo-convex structure 3 is not controlled, and reflection light and diffraction light are caused in some cases. Hence, a method capable of controlling the random nature of the form of the concavo-convex structure and achieving the form that does not surely cause diffraction light is preferable. Example such manufacturing methods are imprinting, embossing, an injection molding, etc. Needless to say, the present disclosure is not limited to those methods.

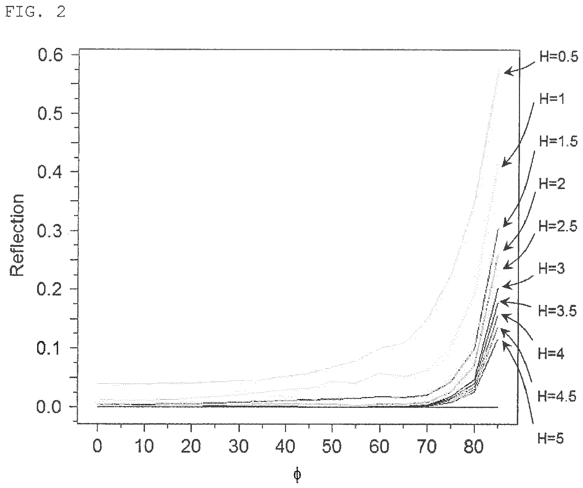

Still further, the antireflection structure 1 has different reflection factors in accordance with the incident angle (an angle when the vertical direction to antireflection structure is 0 degree) of light relative to the concavo-convex structure 3. FIG. 2 illustrates a simulation result for each size of the concavo-convex structure 3 regarding the relationship between an incident angle $\phi$ (degree) of light relative to the concavo-convex structure 3 and the reflection factor of light. In this case, it was assumed that, as for the base material 2 of the antireflection structure 1, a transparent resin (refractive index n = 1.5 and extinction coefficient k = 0) was mixed with carbon particle (refractive index n = 2, extinction coefficient k = 1) at a volume ratio that was 20 %. In addition, the refractive index n and extinction coefficient k of the material were set to be n = 1.6 and k = 0.2 through the following calculation based on the volume ratio between the resin and carbon.

$$n = 1.5 \times (1 - 0.2) + 2 \times 0.2 = 1.6$$

$$k = 0 + 1 \times 0.2 = 0.2$$

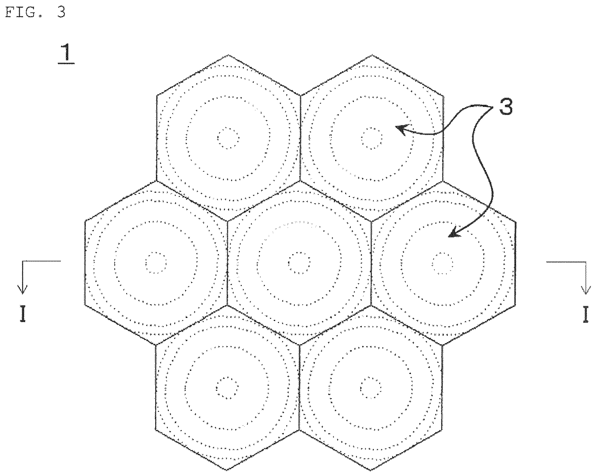

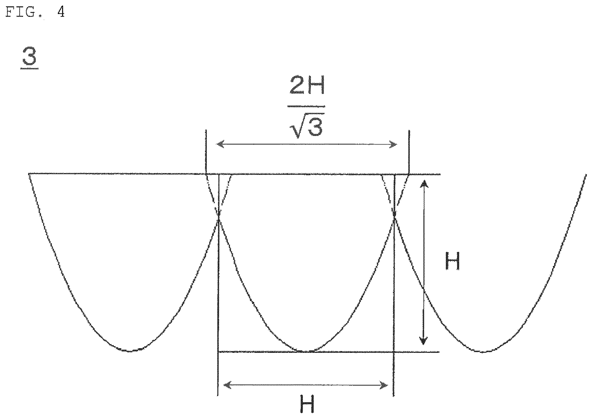

As for the shape of the concavo-convex structure, as illustrated in FIGS. 1, 3, and 4, multiple holes (element structures) in a bombshell shape that was a rotation body satisfying the following formula (1) when the depth was H and the width was D were disposed triangularly so as to satisfy the pith P = H and obtain a honey comb shape.

$$D = \frac{2H}{\sqrt{3}} \qquad (1)$$

In addition, the depth H of the concavo-convex structure 3 was compared for the cases of 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, and 5 $\mu$m. The thickness of the base material 2 was 100 $\mu$m. Still further, the wavelength $\lambda$ of the light from a light source was 500 nm.

A software DiffractMOD available from synopsys corporation (synopsys, Inc) was applied for the simulation.

As is clear from FIG. 2 that, the larger the hole forming the concavo-convex structure is, the lower the reflection factor becomes. In addition, it is clear that the larger the hole forming the concavo-convex structure is, the greater the reflection is suppressed even the incident angle is large. At the incident angle of 85 degrees, in comparison with the case in which the depth H = $\lambda$ (500 nm), When H = 2$\lambda$, the reflection factor remarkably decreases, and when H = 3$\lambda$,

the reflection factor becomes substantially half. When H = 6λ, the reflection factor becomes less than 35 %.

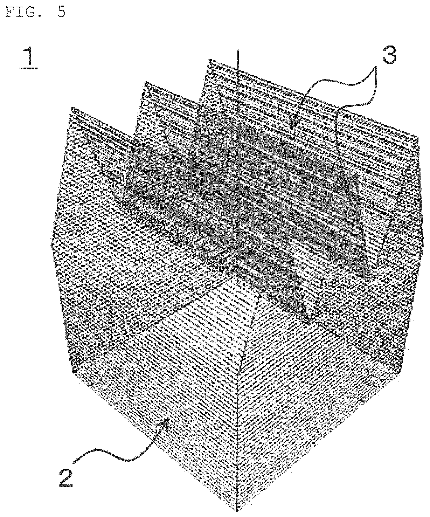

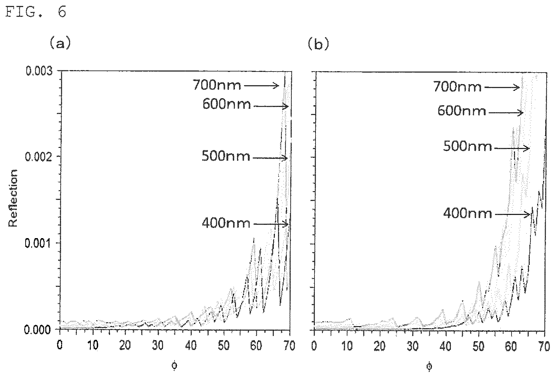

Still further, the concavo-convex structure 3 of the antireflection structure 1 may be a line-and-space shape as illustrated in FIG. 5. In this case, although there is a disadvantage such that the antireflection characteristic involves anisotropy, there is an advantage such that the strength of the concavo-convex structure 3 is improved. FIGS. 6(a) and 6(b) illustrate a simulation and comparison result for each wavelength of incident angle regarding the relationship between the incident angle φ of light relative to the concavo-convex structure 3 in a line-and-space shape, and the reflection factor of light. Fig. 6(a) illustrates a result when light from the light source was emitted to the concavo-convex structure 3 at an incident angle around an axis that was an orthogonal line to the line-and-space shape, while FIG. 6(b) illustrates a result when light from the light source was emitted to the concavo-convex structure 3 at an incident angle around an axis that was a line of the line-and-space shape. It was assumed that the base material 2 of the antireflection structure 1 was formed of a material obtained by mixing a transparent resin (refractive index n = 1.5, extinction coefficient k = 0) with carbon particles (refractive index n = 2, extinction coefficient k = 1) at a volume ratio that was 20 %. In addition, the refractive index n and extinction coefficient k of the material were set to be n = 1.6 and k = 0.2 by the following calculation based on the volume ratio between the resin and carbon.

$$n = 1.5 \times (1 - 0.2) + 2 \times 0.2 = 1.6$$

$$k = 0 + 1 \times 0.2 = 0.2$$

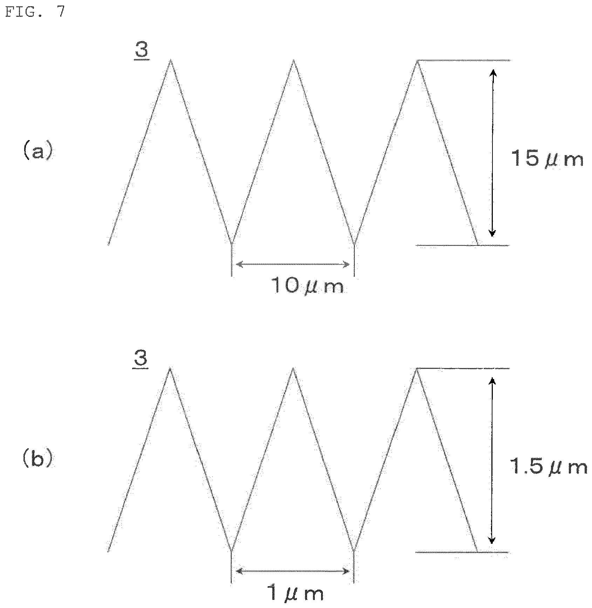

As illustrated in FIG. 7(a), the concavo-convex structure was the line and space structure which was an isosceles triangle having a height (depth) of the cross-section that was 15 μm, and a length (width) of the bottom that was 10 μm. The thickness of the base material 2 was 100 μm.

In addition, the wavelength λ of the light from the light source was set to be four kinds that were 400 nm, 500 nm, 600 nm, and 700 nm.

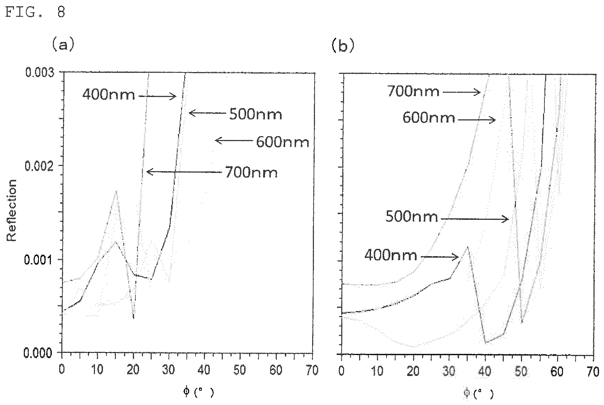

Still further, as illustrated in FIG. 7(b), the simulation was also carried out for a line-and-space structure that was an isosceles triangle having a height (depth) of the cross-section that was 1.5 μm, and a length (width) of the bottom that was 1 μm. The result is illustrated in FIGS. 8(a), 8(b). FIG. 8(a) illustrates a result when the light from the light source was emitted to the concavo-convex structure 3 at an incident angle around an axis that is an orthogonal line to the line-and-space shape, and FIG. 8(b) illustrates a result when the light from the light source was emitted to the concavo-convex structure 3 at an incident angle around an axis that is a line of the line-and-space shape.

A software DiffractMOD available from synopsys corporation (synopsys, Inc) was applied for the simulation.

As is clear from FIGS. 6(a), 6(b) that reflection was sufficiently suppressed. In addition, when compared with FIGS. 8(a), 8(b), it becomes clear that the larger the line-and-space shape of the concavo-convex structure is, the more the reflection factor decreases.

<u>REFERENCE SIGNS LIST</u>

1    Antireflection structure
2    Base material
3    Concavo-convex structure

**Claims**

**1.** An antireflection structure comprising a concavo-convex structure for antireflection formed on a surface of a base material formed of a material that absorbs light,
wherein the concavo-convex structure satisfies P > λ, where λ is a wavelength of light and P is an average pitch of the concavo-convex structure.

**2.** The antireflection structure according to claim 1, wherein:

the material contains a light absorbing component that absorbs the light; and
an average particle diameter of the light absorbing component is equal to or smaller than 1/2 of the wavelength of the light.

3. The antireflection structure according to claim 1 or 2, wherein the concavo-convex structure satisfies $P \geq 6\lambda$.

4. The antireflection structure according to any one of claims 1 to 3, wherein the concavo-convex structure satisfies $H/P \geq 1$ where H is an average depth of the concavo-convex structure.

5. The antireflection structure according to any one of claims 1 to 4, satisfying $L \geq \lambda$ where L is a thickness of the base material.

6. The antireflection structure according to any one of claims 1 to 5, wherein the average pitch P of the concavo-convex structure is equal to or smaller than 10 $\mu$m.

7. The antireflection structure according to any one of claims 1 to 6, wherein the concavo-convex structure is in a form that does not cause diffraction light.

8. The antireflection structure according to claim 7, wherein element structures of the concavo-convex structure are disposed at random.

9. The antireflection structure according to claim 8, wherein either one of or both of a size and shape of the element structure are adjusted in such a way that the number of plane parts is small in comparison with a case in which the size and shape of the element structure are constant.

10. The antireflection structure according to any one of claims 1 to 9, wherein the element structure of the concavo-convex structure is in a bombshell shape with a rotated parabola.

11. The antireflection structure according to any one of claims 1 to 9, wherein the concavo-convex structure is in a line-and-space shape.

12. The antireflection structure according to claim 11, wherein a cross-sectional shape of a convexity of the line-and-space shape is a triangle.

13. The antireflection structure according to any one of claims 1 to 12, wherein the material of the base material is a resin for imprinting.

FIG. 1

FIG. 2

FIG. 3

<u>1</u>

FIG. 4

<u>3</u>

$$\frac{2H}{\sqrt{3}}$$

H

H

FIG. 5

<u>1</u>

FIG. 6

(a)

(b)

FIG. 7

(a)

<u>3</u>

15 μm

10 μm

(b)

<u>3</u>

1.5 μm

1 μm

FIG. 8

(a)

(b)

## INTERNATIONAL SEARCH REPORT

| International application No. |
| --- |
| PCT/JP2016/060306 |

### A. CLASSIFICATION OF SUBJECT MATTER
*G02B5/00*(2006.01)i, *B29C59/02*(2006.01)i

According to International Patent Classification (IPC) or to both national classification and IPC

### B. FIELDS SEARCHED

Minimum documentation searched (classification system followed by classification symbols)
G02B5/00, B29C59/02

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X <br> Y | JP 2010-534342 A (Nippon Shokubai Co., Ltd.), <br> 04 November 2010 (04.11.2010), <br> entire text; all drawings; particularly, <br> paragraphs [0008] to [0171]; fig. 1 to 10 <br> & WO 2009/014264 A1 <br> entire text; all drawings; particularly, <br> paragraphs [0008] to [0171] <br> & US 2010/0226016 A1 & EP 2183622 A1 <br> & CN 101784917 A & JP 5166513 B2 | 1-9 <br> 7-13 |

☒ Further documents are listed in the continuation of Box C.　　☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 June 2016 (20.06.16) | 05 July 2016 (05.07.16) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |
| --- | --- |

Form PCT/ISA/210 (second sheet) (January 2015)

**INTERNATIONAL SEARCH REPORT**

| International application No. |
|---|
| PCT/JP2016/060306 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2014/021245 A1 (Asahi Glass Co., Ltd.), 06 February 2014 (06.02.2014), entire text; all drawings; particularly, paragraphs [0021] to [0025]; fig. 5 to 6B & US 2015/0077841 A1 entire text; all drawings; particularly, paragraphs [0021] to [0025]; fig. 5 to 6B & CN 103718069 A      & CN 103718069 B & KR 10-2014-0033355 A  & KR 10-1467139 B1 | 7-13 |
| Y | JP 2007-304466 A (Matsushita Electric Industrial Co., Ltd.), 22 November 2007 (22.11.2007), entire text; all drawings; particularly, paragraph [0042] & US 2007/0291386 A1 entire text; all drawings; particularly, paragraph [0055] & EP 1857841 A1          & CN 101082680 A & CN 101082680 B | 7-13 |
| Y | JP 2009-104103 A (Omron Corp.), 14 May 2009 (14.05.2009), entire text; all drawings; particularly, paragraphs [0029] to [0041]; fig. 1 to 3 & US 2010/0328776 A1 entire text; all drawings; particularly, paragraphs [0061] to [0074]; fig. 1 to 3 & US 2014/0092480 A1    & WO 2009/044578 A1 & EP 2189822 A1          & KR 10-2010-0034761 A & KR 10-1154069 B1       & CN 101802651 A & CN 101802651 B         & JP 4539759 B2 | 10,13 |
| Y | JP 2007-264613 A (University of Tsukuba), 11 October 2007 (11.10.2007), entire text; all drawings; particularly, paragraphs [0070] to [0107]; fig. 1 to 8 (Family: none) | 11-13 |
| Y | JP 2009-162831 A (Oji Paper Co., Ltd.), 23 July 2009 (23.07.2009), entire text; all drawings; particularly, paragraphs [0029] to [0031], [0075] to [0078]; examples 1 to 2 (Family: none) | 13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010026853 A